# EUROPEAN PATENT SPECIFICATION

(11) **EP 2 673 581 B1**
(45) Date of publication and mention of the grant of the patent: **23.09.2015**
(21) Application number: 12790666.7
(22) Date of filing: 12.10.2012
(51) Int. Cl.: F25D 31/00, A23G 9/12, B01F 15/06, B01F 7/16, B01F 7/00, B01F 15/02, B01F 13/10, A23G 9/08, A23G 9/28

(54) **MULTIPURPOSE PROFESSIONAL KITCHEN MACHINE, IN PARTICULAR FOR GASTRONOMY/CATERING PROCESSES, BUT ALSO FOR CONFECTIONARY, ICE-CREAM MAKING AND CHOCOLATE MAKING PROCESSES**
MEHRZWECK-KÜCHENMASCHINE, INSBESONDERE FÜR GASTRONOMIE-/CATERING-PROZESSE, ABER AUCH ZUR HERSTELLUNG VON SPEISEEIS, SCHOKOLADE UND SONSTIGEN SÜSSWAREN
APPAREIL DE CUISINE PROFESSIONNEL MULTIFONCTION, EN PARTICULIER POUR DES PROCESSUS DE GASTRONOMIE/RESTAURATION, MAIS AUSSI POUR LA CONFISERIE, DES PROCÉDÉS DE PRODUCTION DE GLACE ET DE CHOCOLAT

(30) Priority: 14.10.2011 IT MI20111878; 20.01.2012 IT MI20120059; 12.04.2012 IT MI20120594
(43) Date of publication of application: 18.12.2013
(73) Proprietor: Telme S.P.A., 26845 Codogno (IT)
(72) Inventor: CIGOLINI, Aldo, I-26861 Retegno Di Fombio (lo) (IT)
(74) Representative: Lotti, Giorgio
(86) International application number: PCT/IB2012/055561
(87) International publication number: WO 2013/054308

(56) References cited:
- EP-A1- 0 596 221
- EP-A1- 0 770 333
- EP-A1- 2 208 421
- BE-A1- 888 969
- FR-A1- 2 558 688
- US-A- 3 958 968
- US-A- 4 655 605

## Description

The present invention refers to a multipurpose professional kitchen machine, and related components, in particular for gastronomy/catering processes, but also for confectionary, ice-cream making, and chocolate making processes.

The present invention therefore relates to a kitchen machine which, as will be deduced from the description, can be defined as a sort of "universal pot" able on one hand to perform a wide range of operations in an extremely effective/automatic way and on the other hand, to enable the user the visual control of the process and the option of being able to take action in a simple way at any moment.

In other words, the multipurpose professional kitchen machine according to the present invention on one hand is able to stir, mix, whip, cut, knead, heat, cook, preserve, temper, cool, fast cooling down, and freeze food products, in particular also solid/packaged food in addition to liquid, creamy and pasty, and on the other hand, as for the common pots, offers the user a chance to see the products in processing and to access the product at any moment during the process in order to add any other ingredients.

Currently, there are different multipurpose machines on the market that combine hot and cold food processes. However, all these known machines have the disadvantage of being designed and structured to achieve efficiently only some specific process.

For example, the common ice-cream making machines prepare efficiently ice-creams, sorbets, granitas, milkshakes, semifreddos and other similar products, but they are absolutely unable to achieve catering processes, such as cooked meat or fish, knead or cut and/or cook and cool solid and/or packaged foods.

In other words, the known machines cannot absolutely be defined as "universal", that is, able to process also gastronomy or catering for other than liquid, creamy and/or pasty food.

The second disadvantage consists in that also the single planned cycles are not completely efficient, but on the contrary in a perfect manner in terms of performances of time/result.

Furthermore, the difficulty that sometimes is encountered in known machines during the cleaning thereof must not be underestimated.

In fact, in different multipurpose known machines the products transit from a first vessel or cylinder of admission and heating to a second vessel or cylinder of processing, cooling and delivery, causing, in addition to the above mentioned problem of cleaning, also a further series of drawbacks.

In particular, these drawbacks consist in that the products in process cannot be monitored visually by the user when transited in the second cooling cylinder.

In addition, small known kitchen machines for domestic use are able of performing a plurality of operations. However, they do not provide the possibility of refrigerating, fast cooling down, and freezing. Furthermore, the known machines include rotating members which also provide pushing the substances towards the delivery outlet through a delivery duct connected to the bottom of the collection vessel.

At the discharge outlet, a removable lid is usually envisaged, for example of the bayonet type, able to selectively open or close the drain to allow delivery of the product.

For safety reasons, it is required the presence of the outlet protections, the task of which is to prevent the accidental insertion of fingers/hands of the user in the outlet duct and thus avoid contact with the rotating members located upstream of the outlet or in the collection vessel.

A solution commonly adopted currently is that of providing a reticular structure positioned on the discharge outlet. In fact, this solution on one hand allows the discharge of processed food substances through the meshes of the grid, and on the other hand prevents the user to insert fingers/hands in the outlet.

Unfortunately, such a solution, although widespread, is not at all optimal either for machines dedicated to the process of pasty substances, such as soft ice-cream and ice-cream making machines, nor for the recent universal machines used for gastronomy in general where it is also proceeded in the preparation of meat, fish or other food dishes of solid pieces.

For the first type of machines, the known protective grids have the disadvantage of altering the consistency of the pasty substance treated during the transit in the meshes of the grid.

For example, whipped cream or ice-cream in general transiting in the mesh of the grid, are at least partially "slumped", thus losing the desired soft consistency.

In the case wherein the machine is of the universal multipurpose type for the process of foods in solid pieces, these foods, being in fact solids, cannot even be delivered because blocked by the protective grid.

It is taken for granted that tampering or removal of the protective grid, for example to enable delivery of solid piece products, not only breaks the current safety regulations, but exposes the user to the risk of accidentally coming into contact with the rotating members located upstream of the discharge outlet.

A problem of known kitchen machines with removable accessories is that of guaranteeing a correct whipping of cream and other creamy substances.

To this end, a whipping group is known, placed in rotation by a motor drive.

In addition to this drag motion, there are whipping elements that can also make relative rotations about the axis thereof arranged parallel to the drag axis. Currently, this relative motion is imprinted to the whipping elements mainly by means of mechanical transmissions interposed among the whipping elements and the drag shaft onto which they can be mounted.

FR 2 558 688 A1 discloses a multipurpose professional kitchen machine according to the preamble of claim 1.

Object of the present invention is to provide a multipurpose professional kitchen machine alternative to those known currently that is able to perform efficiently gastronomy processes, but also of confectionary, ice-cream making, and chocolate making processes.

This object according to the present invention is achieved by providing a multipurpose professional kitchen machine as set forth in claim 1.

Further characteristics of the invention are highlighted by the dependent claims.

The characteristics and advantages of a multipurpose professional kitchen machine according to the present invention will become more evident from the following illustrative and non-limiting description, by referring to the attached schematic drawings wherein:
- Figure 1 is a perspective view of an embodiment of a multipurpose professional machine according to the present invention;
- Figure 2 is a top perspective view of the inlet opening for the ingredients of the multipurpose professional machine of Figure 1;
- Figure 3 is a cross-section view of the multipurpose professional machine of Figure 1 envisaged with a removable low basket for collection of the ingredients;

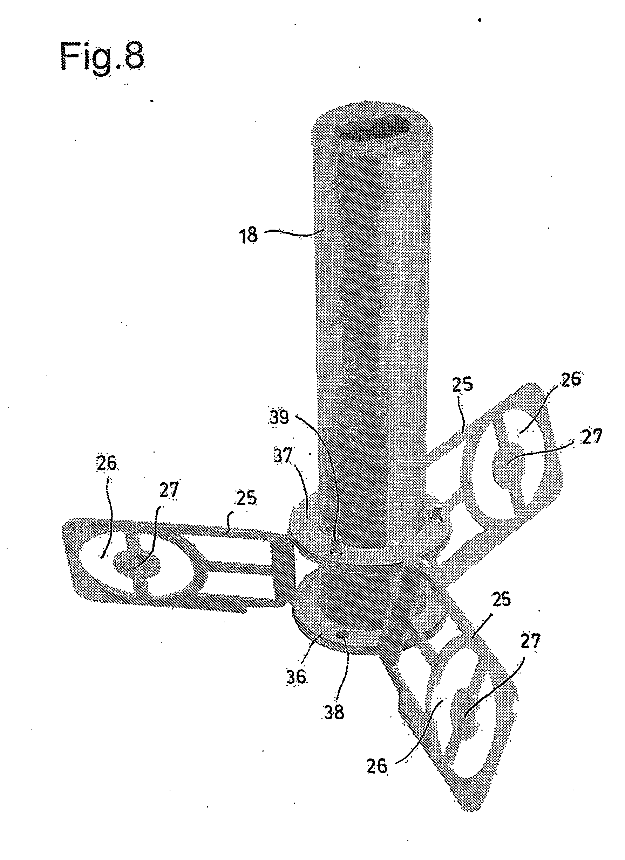

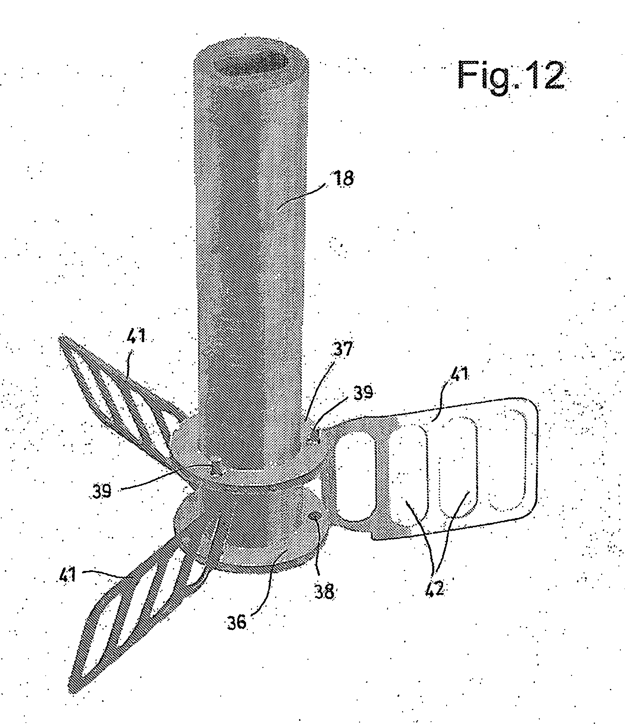

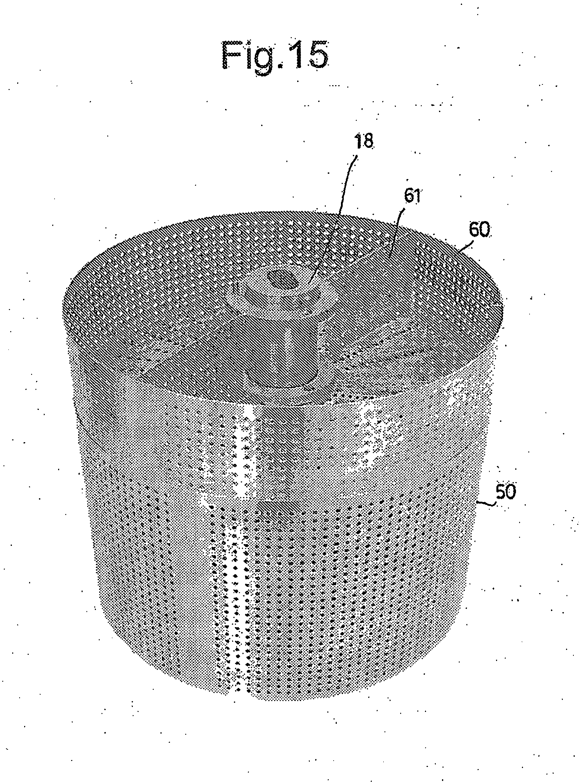

- Figures 4-21 are perspective views of some of the components of the multipurpose professional machine;
- Figure 22 is a perspective view of a machine for the process of food substances envisaged with a protective device of the delivery outlet;
- Figure 23 is a perspective view of the protective device of the delivery outlet in a closed condition;
- Figure 24 is a perspective view of the protective device of the delivery outlet in an open condition;
- Figure 25 is a side view of the protective device of the discharge outlet;
- Figure 26 is a cross-section view of the protective device of the discharge outlet that can be mounted on a machine for the process of food substances;
- Figure 27 is a rear view, that is, from the side of the machine, of the outlet protective device;
- Figure 28 is a bottom view of the: outlet projective device;
- Figure 29 is a perspective view of an embodiment of a removable component for multipurpose professional machines suitable for whipping cream, meringues, sponge cakes, macaroons and other similar substances;
- Figure 30 is a top view of the component of Figure 29;
- Figure 31 is a front view of the component of Figure 29;
- Figure 32 is a top view of the component of Figure 29 that can be mounted in a multipurpose professional kitchen machine; and
- Figure 33 is a schematic split front view of the component of Figure 29 mounted in a multipurpose professional kitchen machine.

With reference to the Figures, with 10 is shown an embodiment of a multipurpose professional kitchen machine according to the present invention.

This multipurpose professional kitchen machine 10 is suitable for gastronomy/catering processes, but also for confectionary, ice-cream making and chocolate making processes.

It provides an upper inlet opening 13 for the ingredients, underneath thereof is formed a single vertical vessel or cylinder 14 for receiving and the ingredients to be processed.

As will be made clear hereafter, in this single vertical cylinder 14, are performed all possible processing, or those neutral, such as cutting or kneading, as well as those of heating and cooling. These processes of heating and cooling will be further accelerated thanks to particular components which will provide to place into rotation, automatically in accordance with set programmes, the products during the above mentioned operations.

The vessel 14 is directly connected to a front delivery opening 12 by means of an inclined channel 15 for facilitating the outlet of the processed products, in the case wherein the products are of a liquid or pasty/creamy nature.

Otherwise, for solid or packaged products, it is possible to extract from the cylinder 14 directly the baskets containing these products.

During the entire process, the products remain in the vessel or vertical cylinder 14 and they can be constantly monitored visually by the user through the transparent lid located at the vessel or vertical cylinder 14.

The user can therefore take action at any moment by adding another ingredient or changing the process settings at will.

To this end, the lids, standard 11 and used for cooking 11', are made of transparent material, and possibly equipped with an element of selective closure 12'' of an opening formed in the lids thereof.

This opening serves, on one hand as an outlet for steams, generated during the process and on the other hand, by cooperating with a particular funnel 12', as inlet opening for liquid or dusty foods.

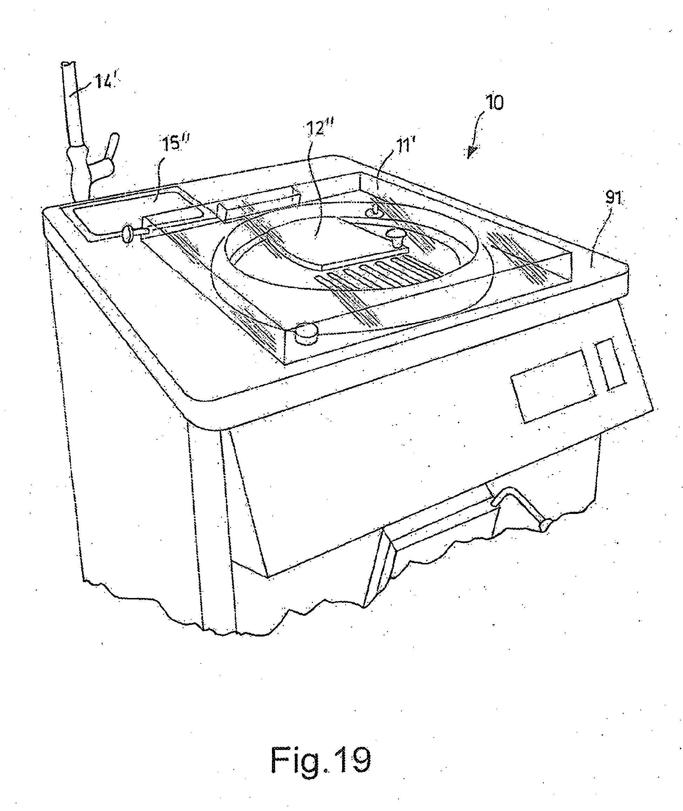

Hence, in the embodiment shown in figure 19, the correct embodiment of the processing is safeguarded; in fact, the lid remains tightly closed on the inlet opening 13, and at the same time, the user is allowed to take action on the products under process.

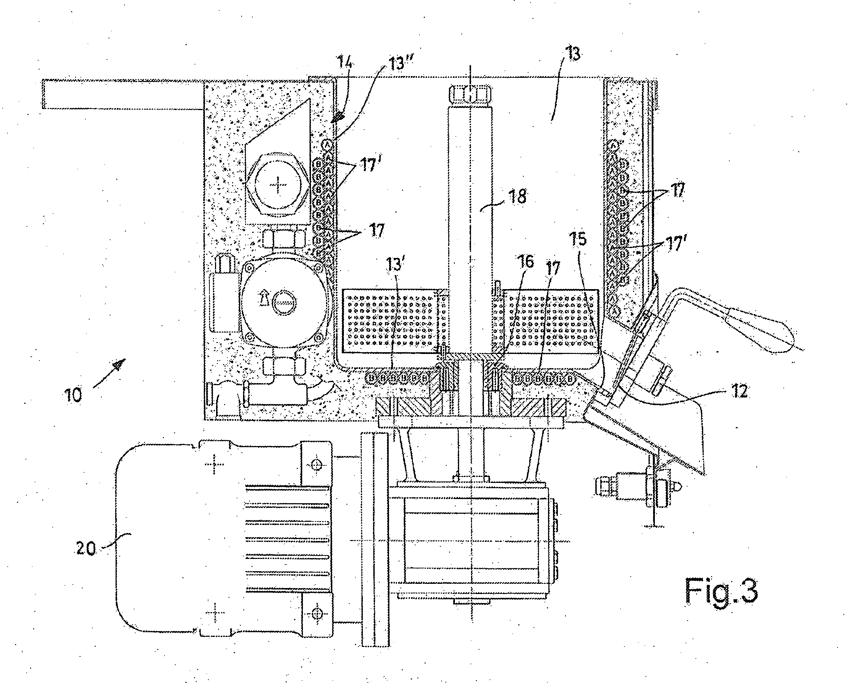

With reference to Figure 3, in the centre portion of the bottom of the vessel or cylinder 14 are envisaged receiving devices 16 of a vertical drag sleeve 18 of the components.

This sleeve 18 extends from the bottom up to the inlet opening 13.

This sleeve 18 is also equipped with portions of male-female coupling with the processing components at the base thereof.

In particular, the coupling of the sleeve 18 with the components is achieved by means of pins 19 formed on the base of the sleeve 18 which can be inlet in respective holes 38 formed on the lower portions of the processing components.

Even the processing components are in turn equipped on the upper surfaces with pins of male-female coupling with other processing components.

The machine has independent channels for the circulation of thermo heating conductor liquid 17, and refrigerant gas for cooling 17', defining in fact two independent circuits, one for heating, and one for cooling, acting on the vessel 14.

The presence of two independent circuits makes the machine particularly rapid in the thermal inversion between heating and cooling.

In particular the heating channels 17 are arranged both at the bottom and at the sides of the vessel or cylinder 14, while the channels for cooling 17, are arranged only at the sides of the vessel 14.

This particular arrangement of the two independent circuits of heating and cooling with respect to the vessel 14 is not random but optimises the thermal exchanges required in particular working conditions of the machine.

In fact, object of the machine of the present invention is that of being "universal", namely to be able to perform, if not all, at least a large number of activities for food preparation, including also the preparation of a lightly fried preparation.

The tests carried out by the Applicant have shown that for some activities of cooking, such as precisely the lightly fried preparation, it is necessary to have an effective heating associated with the bottom of the vessel.

On the contrary, for all the activities of cooling, the latter is made only along the sides of the vessel, being in fact cooling achieved during the shaking of the products to be cooled.

In other words, the Applicant has ascertained that the presence of cooling on the bottom of the vessel is superfluous, while it becomes very important to have heating not only on the sides, but also in that portion of the bottom of the vessel.

To this end, it is also possible to presume making independent the heating channels associated with the bottom of the vessel with respect to the heating channels associated with the lateral sides of the vessel thereof.

This particular arrangement of the two independent circuits of heating and cooling with respect to the vessel 14 is neither mentioned nor suggested by the prior art documents EP077333 and BE 888969 which show channels associated also to the bottom of the vessel.

In these known embodiments, in fact, the independent circuits of cooling and heating are not two, but only one circuit which can be selectively activated in cooling or heating.

Furthermore, also drawing on the teachings of other documents of the prior art where there are two independent circuits of cooling and heating located on the sides of the vessel, the skilled person in the sector at most would reach into splitting in two the circuits envisaged in EP077333 and BE 888969 both at the bottom and of the sides of the vessel.

This skilled person in the sector would therefore reach a solution other than the present invention, where, in an original way, to the bottom of the vessel are associated only the heating channels, thus reducing the overall dimensions and simplifying entirely the machine.

Furthermore, always in order to optimise the machine from an energetic point of view, the circulation of the cooling gas is carried out continuously or intermittently in a selective manner, depending on each case.

Similarly, also the heat-conductor liquid could in theory be fed continuously or intermittently.

The Applicant has advantageously found that with intermittent circulation the same results can be achieved with a considerable energy saving.

Naturally, a motor drive 20 is envisaged to be arranged, for example, underneath the vessel for controlling in rotation, at the required speeds, the sleeve 18, and the other supplied components, in both rotation directions.

Moreover, this speed can be changed at will at any moment by acting on a push button control panel formed in the front of the machine 10.

Analysing the innovative components that may or may not be associable to the sleeve 18, some of which are visible in the attached figures, a three-blade shear 21 is mentioned.

The term three-blade is only by way of example of the embodiment, shown as a shear component.

In fact, according to the present invention, this shear component can have one, two, or more blades.

In the following description, the term three-blade will be used only for ease of explanation.

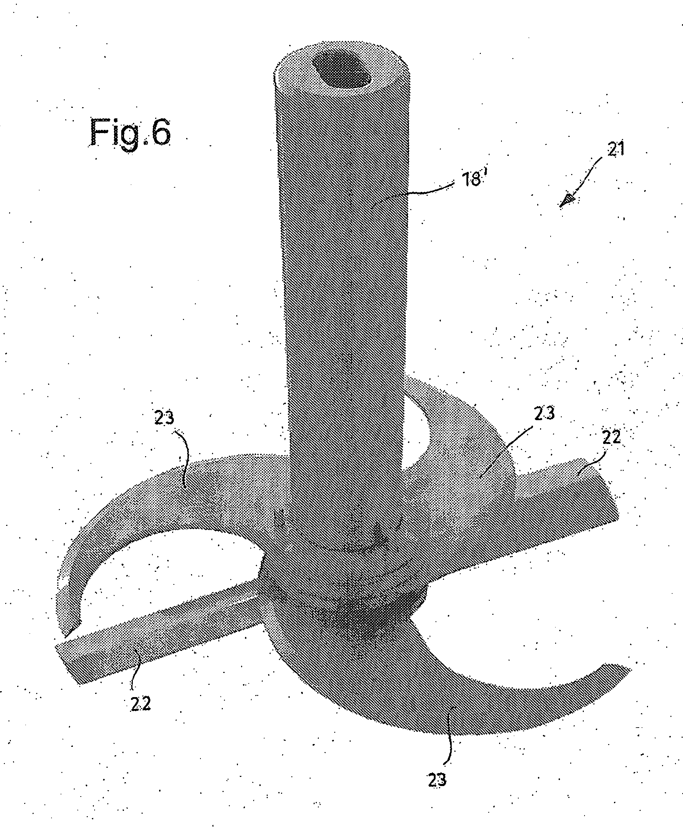

This three-blade shear 21 is provided with a fixed sleeve 18' thereof, see Figure 6, and at the base of three blades 23 and two abutment plates 22 inclined towards the bottom of the vessel 14 for handling of the ingredients resting on the bottom of the vessel 14.

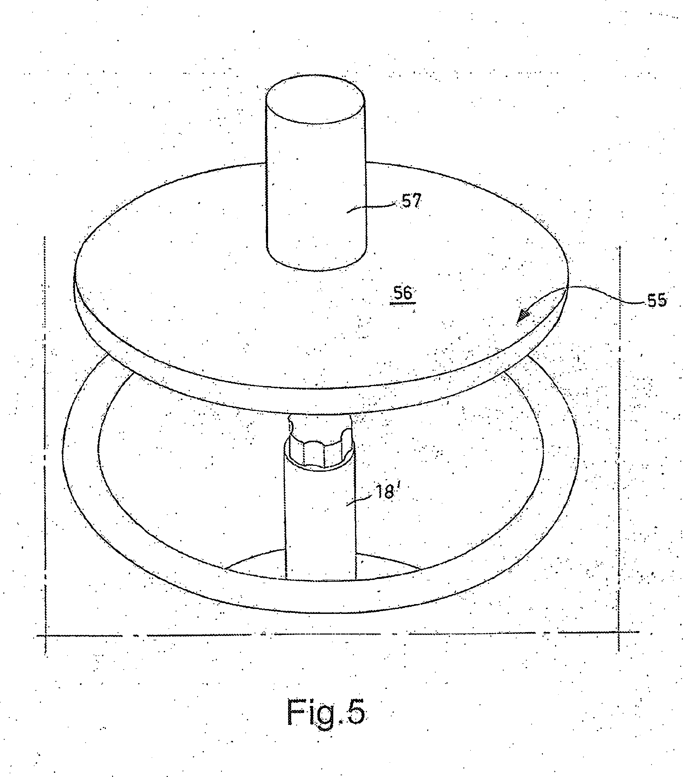

In figure 5, it is also shown a lid accessory 55 of the three-blade.

In particular, the lid accessory 55 of the three-blade comprises a disk 56, preferably made of plastic, with a perforated central sleeve 57 which is fitted on the sleeve 18' of the three-blade 21.

As already specified, with the term three-blade 21, it is intended a shear member which can have one, two, or more blades.

Use is extremely simple, the three-blade body 21 is inlet inside the cylinder 14 of the machine 10, then the ingredients to be chopped are added, and thereafter the lid 55. As the ingredients are chopped, the lid 55 falls freely by gravity along the sleeve and the lower part of the disk 56 can rest on the pins that protrude from the last ring of the three-blade 21 so that the lid would never touch the upper blade.

Among the components, also a rotary throttle is envisaged for whipping 24, axially associable to the sleeve 18 and equipped with three radial extensions 25, inclined with respect to the vertical.

Each of these inclined extensions 25 is equipped with a circular opening 26 with a central island portion 27.

As shown, the coupling portions of the components to the sleeve 18 comprise two superimposed and separated receiving rings 36, 37, where the lower ring 36 is equipped with receiving holes 38 complementary to the pins 39 protruding from the top ring 37.

In this way, both cleaning and handling of the components thereof are facilitated.

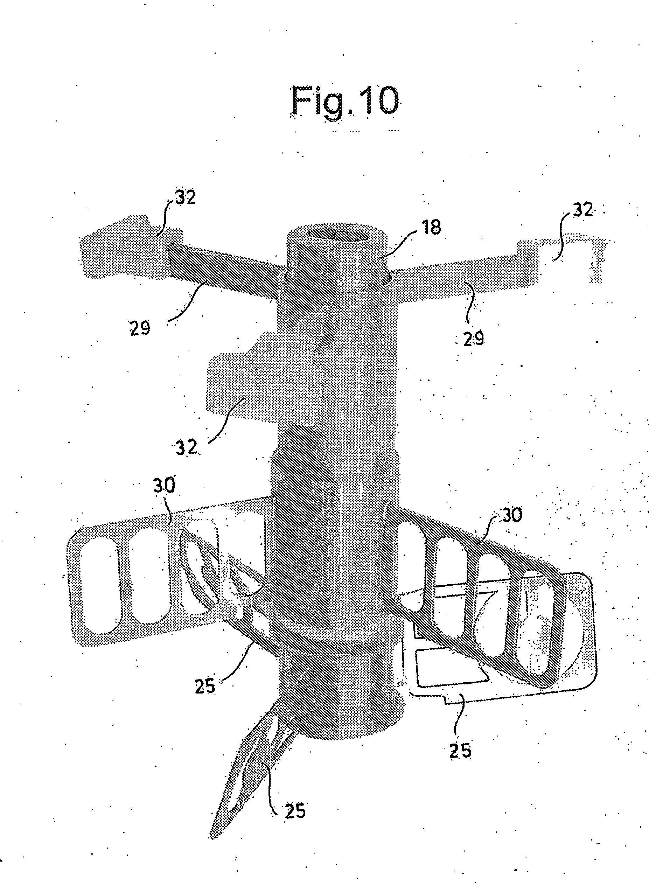

Combined with the rotating throttle for whipping 24, a fixed abutment throttle 28 is envisaged axially associable to the sleeve 18 above the rotary throttle for whipping 24, as shown in Figure 10.

This fixed abutment throttle 28 is equipped with upper anti-rotation radial arms 29 of abutment against the lateral sides of the vessel 14 and at the bottom of three radial extensions 30 with vertical slots 31.

The ends of the radial arms 29 are covered by centering elements 32 acting against the lateral sides of the vessel 14.

Another envisaged component is a multipurpose rotating throttle 40, axially associated with the sleeve 18 and equipped with three inclined radial extensions 41 with vertical slots 42.

The vessel 14 can also contain a high basket 50, a low basket 60, and a flat basket 90 for collecting the ingredients, mountable independently or combined on the sleeve 18 to perform simultaneous cooking.

Moreover, at least one of the baskets is also equipped with divider baffles 51, 61 for separating process areas.

It can further have basket removable elements shaped in a complementary manner to the areas defined by the baffles 51 to allow fast, easy, and independent extraction for the ingredients inlet in a particular sector.

Finally, are envisaged a rotating anchor for kneading 70, and a standard multipurpose stirrer 80 that can be mounted independently.

Both the rotating kneader anchor 70 and the standard multipurpose stirrer 80 extend along the entire vertical axis of the vessel 14 and are envisaged with both radial arms 71, 81, and inclined vertical arms 72, 82, connected mutually.

These vertical arms 72, 82, are partly coated with one or more scraping elements 73, 83, 84 and centering elements 85 with the lateral sides of the vessel 14. These scraping elements 73, 83, 84 and centering elements 85, easily replaceable without the use of tools, can act either on the bottom or on the lateral sides of the cylinder 14.

A completely original method allows treating even solid products and/or packaged in vacuum and not only pasty or liquid/creamy substances, like in the prior art.

The innovations introduced are manifold.

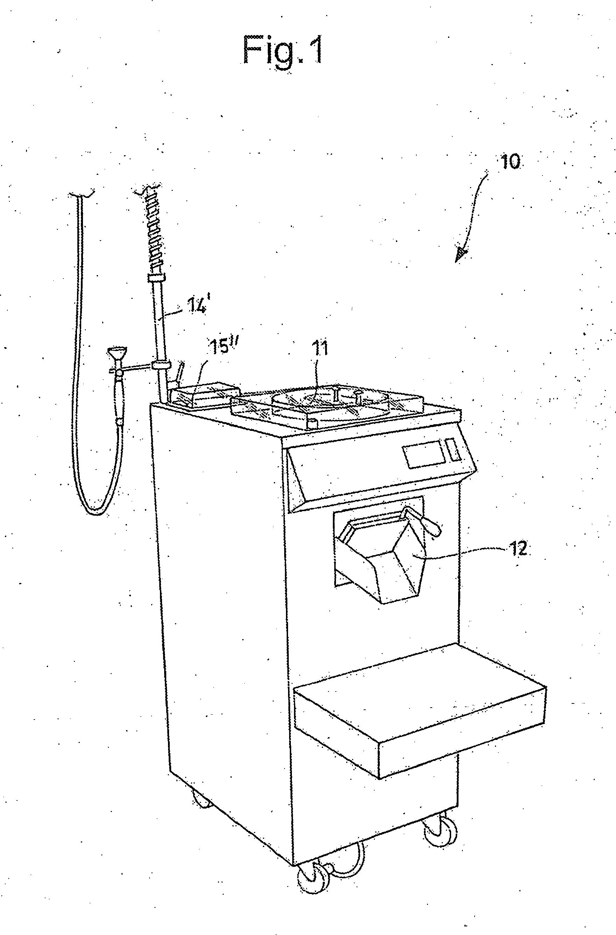

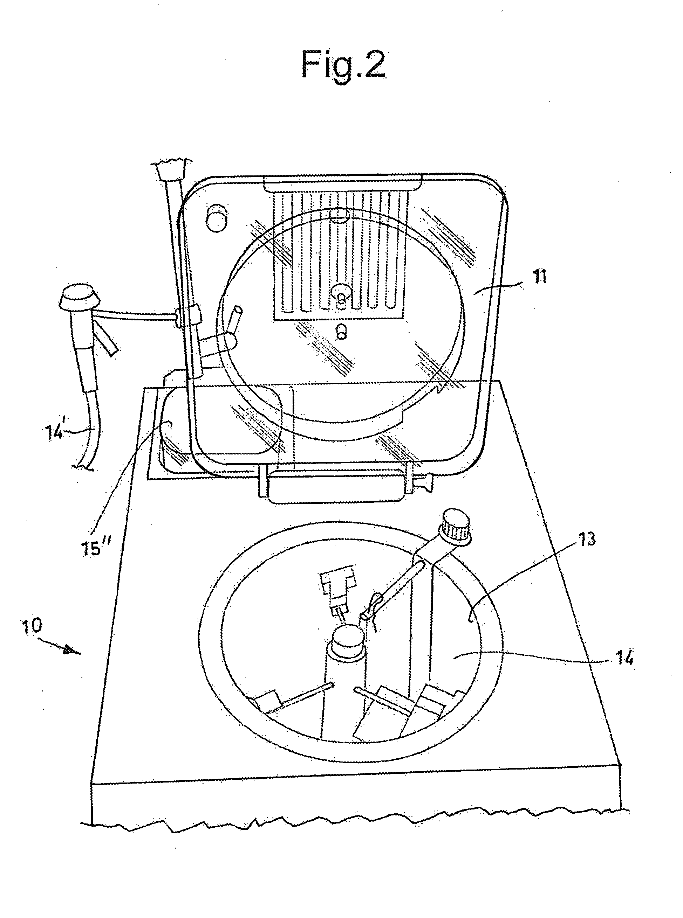

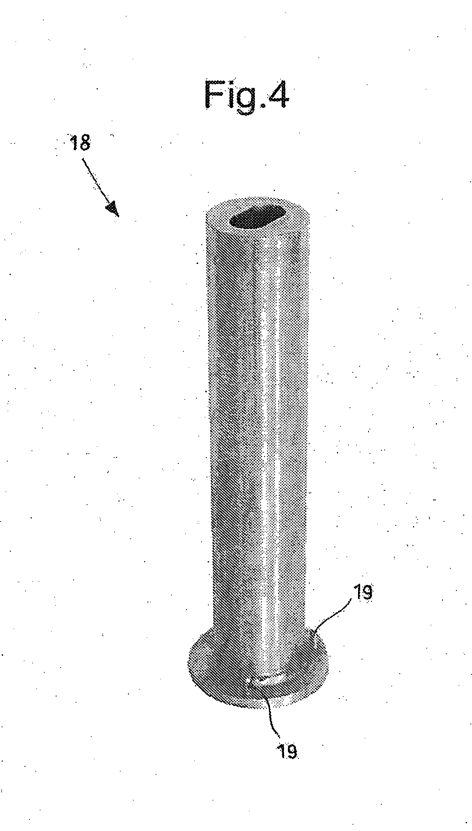

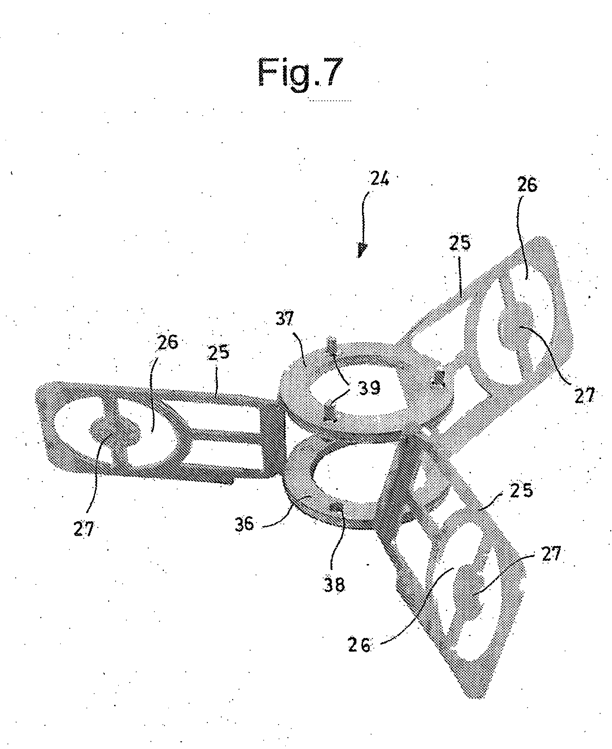

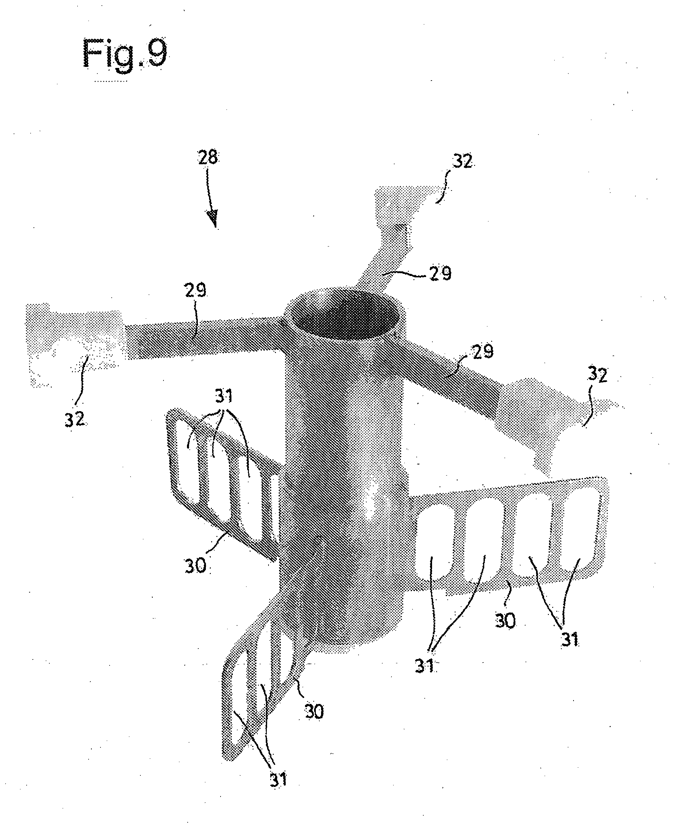

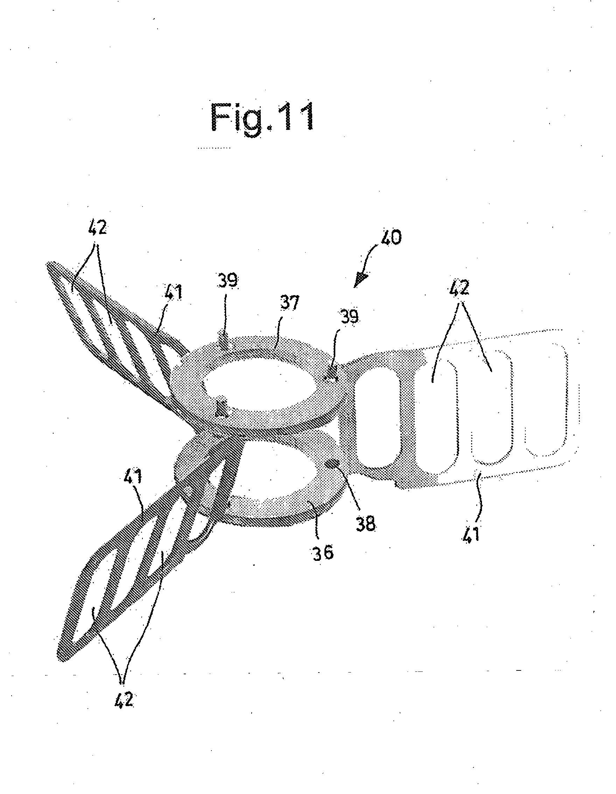

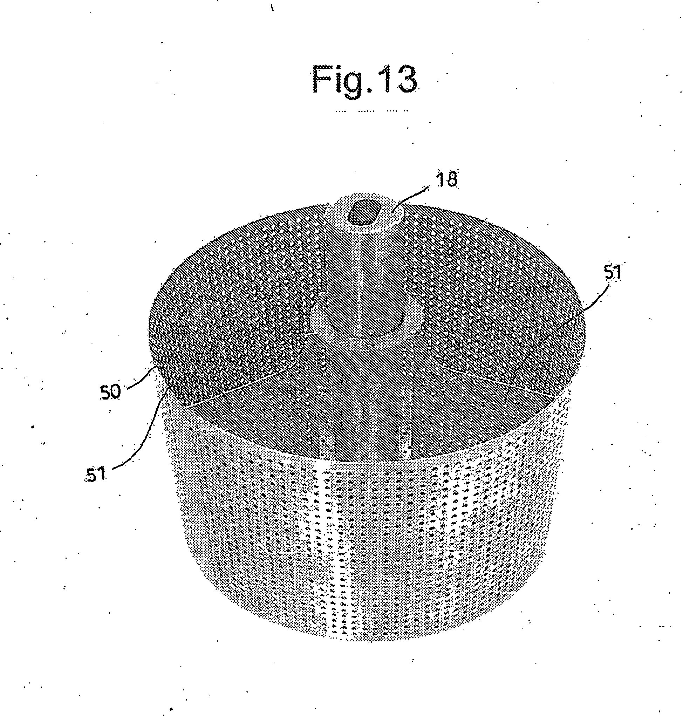

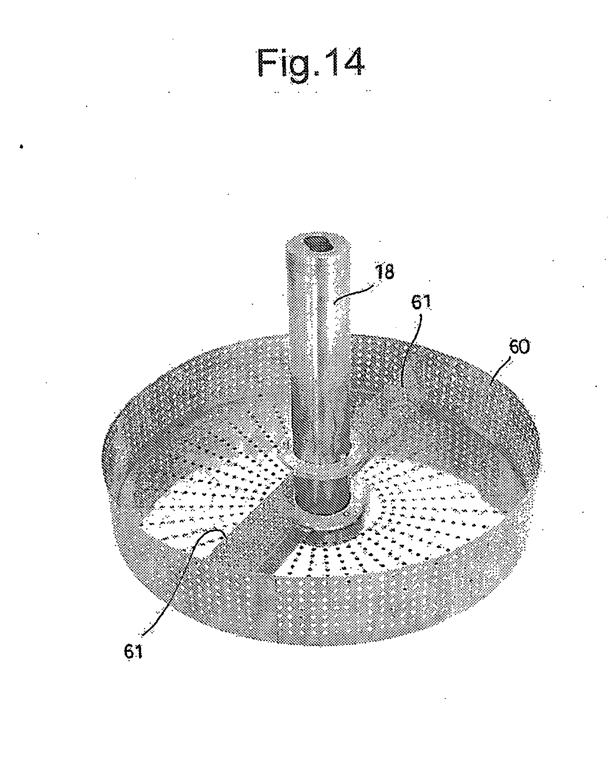

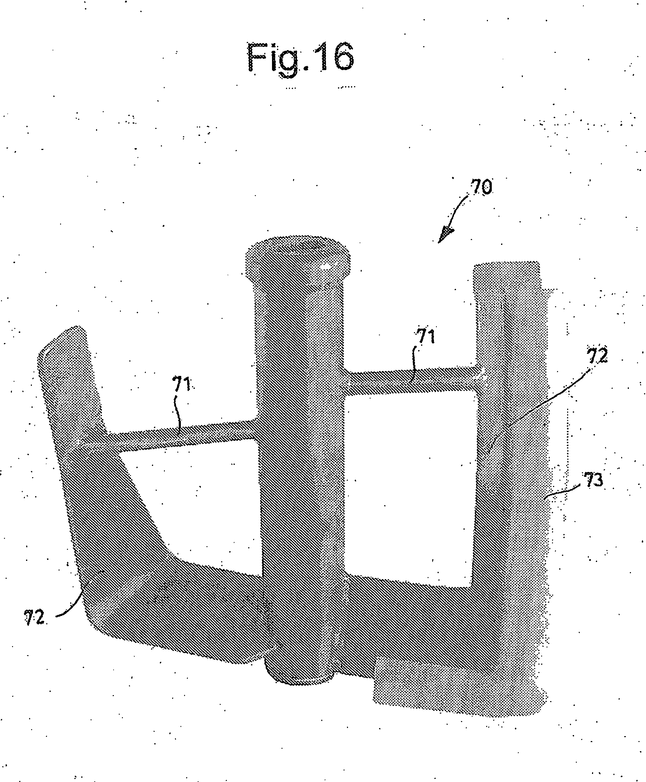

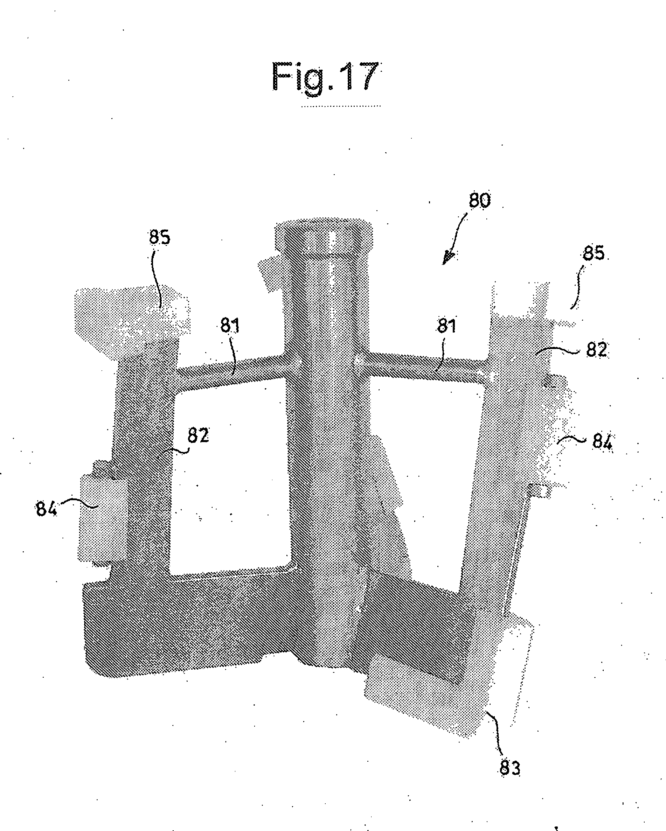

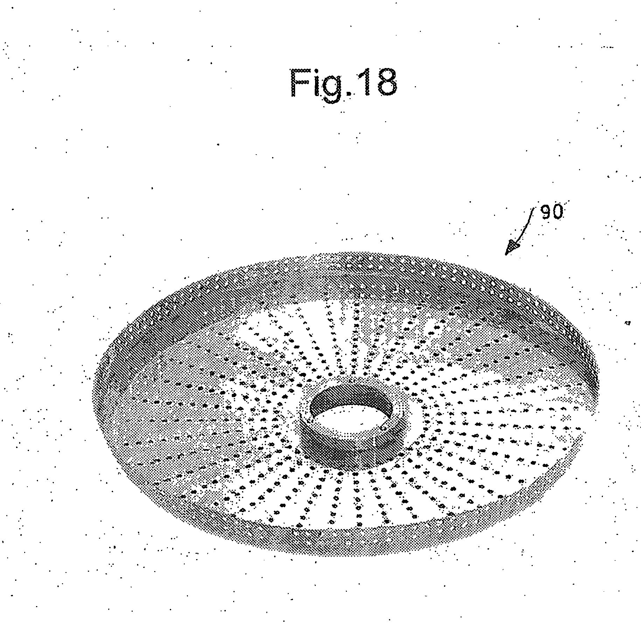

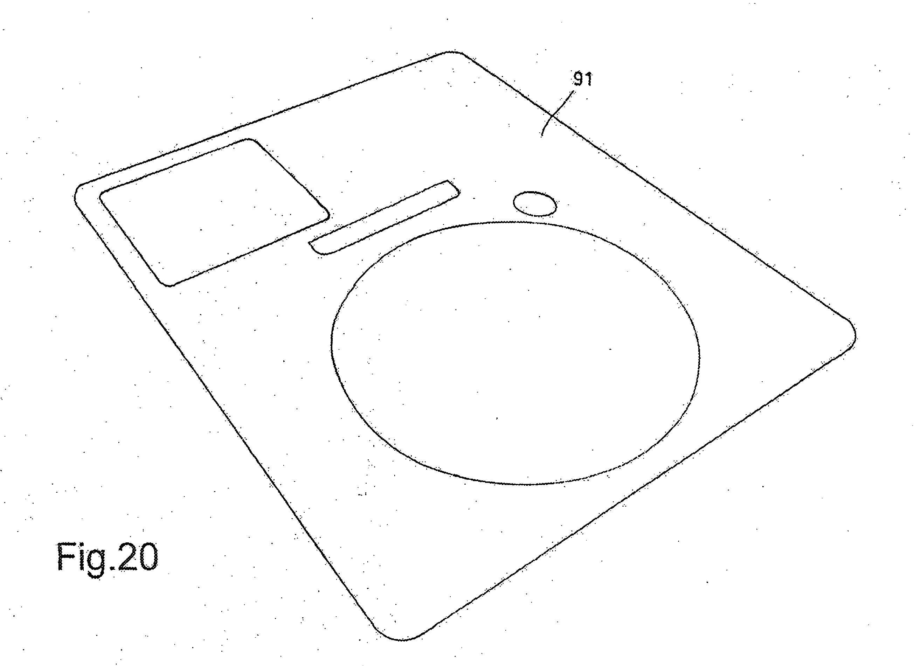

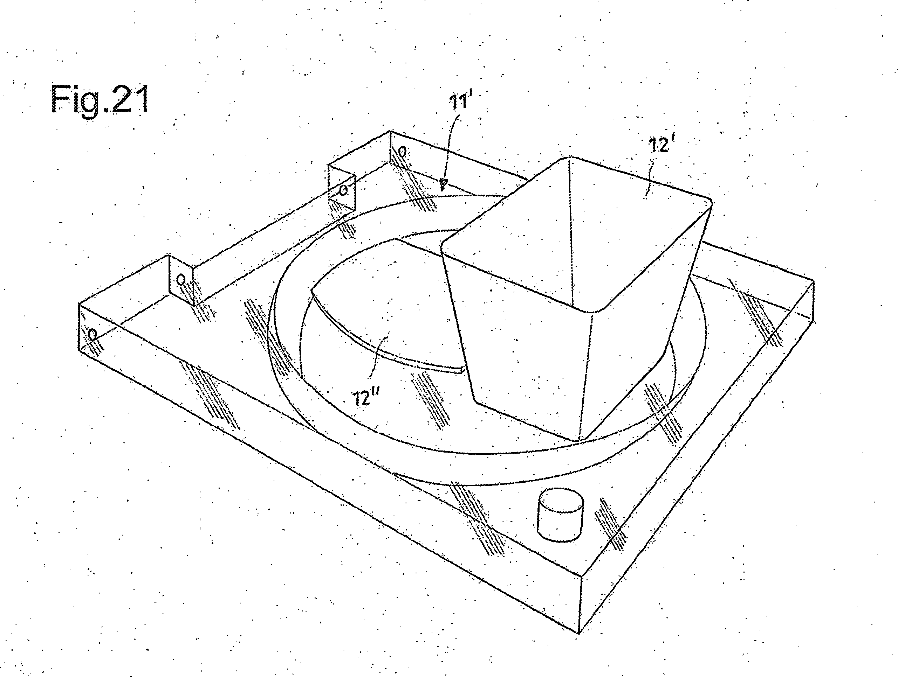

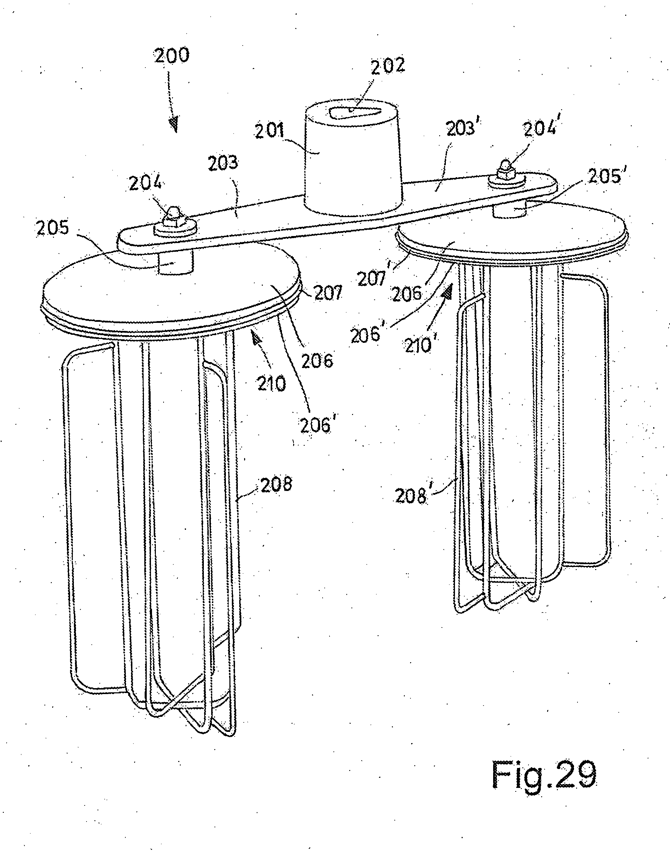

A first aspect concerns the components among which can be mentioned:
- a standard lid 11, Figure 2, which is generally used for processes that do not require heating or cooking;
- a lid for cooking 11', figure 21, able to prevent the formation of condensation on the plane of the machine and accelerates heating/cooking;
- a loading funnel 12', figure 21, associable to the lids for the introduction of different ingredients;
- a protective coating 91, Figure 20, removable for protection from heat;
- a standard multipurpose stirrer 80, Figures 17, that can be used for very broad products of gastronomy, confectionary, ice-cream making and chocolate making processes;
- a contrast plate used, in particular, for ice-cream making and some kneading;
- a drag sleeve 18, Figure 4, for fast assembly/disassembly of the components;
- a multipurpose rotary throttle 40, Figure 11, for frothy kneads, mayonnaise, sauces;
- a rotary throttle for whipping 24, Figure 7, cream, egg white, egg yolk with sugar, sponge cake;
- a fixed contrast throttle 28, Figure 9, to be used with the rotating throttle for whipping;
- a three-blade shear 21, Figure 6, a shearing member which may have one or two abutment blades and with two abutment blades shearing and chopping effectively the solid foodstuffs;
- a lid 55, Figure 5, for the three-blade that contain adequately the products during the shearing phase.
- a rotating anchor 70, Figure 16, for kneads of the shortcut confectionary type, bread, pizza, flat bread, puff pastry, piadina, gnocchi, egg pasta, cream puffs, pancakes, short pastry, doughnuts, biscuits, sponge cakes, tarts, brioches, meringues;
- a high cooking basket 50, figure 13, for different products, such as pasta, cheese and cooking of solids or vacuum packaged;
- a low cooking basket 60, Figure 14, for different products, such as steamed vegetables, fish and meat;
- a flat basket 90, figure 18, for different products, such as steamed vegetables, omelettes and cooked foodstuff under vacuum;
- an object carrier 15'' or ingredient carrier element, Figure 1, formed on the upper plane of the machine;
- a shower washing system 14', Figure 1, with hot/cold water stirring and possibility of jet or spray delivery depending on the needs, the shower being equipped with a flexible adjustable shank in any direction;
- a rotary whipping elements for whipping 200, figure 29, which will be detailed later, suitable for whipping cream, meringues, sponge cakes, macaroons and other similar substances.

Together with the innovative components, the machine has also manufacturing peculiarities such as:
- a manufacturing simplicity that makes the machine competitive; in fact, all food products processes are made in a single vessel, arranged vertically;
- the use of all the vessel surface to convey hot/cold;
- the ease of assembly and disassembly of the various components that provide, in the lower part, female coupling elements and, in the upper part, male coupling elements;
- a large range of temperatures that can be programmed between -15 °C and +110 °C;
- the time for heating/cooking that can be programmed from 1 to 999 minutes;
- the variable shaking from 10 to 500 rpm with rotation of the components in both directions;
- providing operating cycles completely automatic or manual;
- providing self-diagnostic functions of malfunctions;
- the quick and easy washing and disinfecting;
- the registration of cycles as proof of the variables used in processing such as tracking of the aforementioned performed processes.

Therefore, in general, the machine can provide stirring, mixing, whipping, shearing, kneading, heating, cooking, preserving, tempering, cooling, fast cooling down, and freezing food products.

Since the heating occurs through heat-conductor liquid in circulation, targeted cooking can be made, burnings of the product on the lateral sides of the cylinder are avoided and the entire cooking process is sped up. Moreover, transmission of heating, and the fast cooling down of the temperature, takes place quickly because the product inside the cylinder is stirred or put into rotation and there is at the same time a well controlled and prolonged maintenance of a specific temperature.

Advantageously, the rapid cooking and cooling reduce the weight loss and preserve the colours, the aromas, and the natural flavours of the food.

As already described, the machine 10 is of the type comprising an inlet opening 13 for the ingredients to be processed, a removable lid 11, 11' for closing the inlet opening 13 and a delivery opening 12 for the processed ingredients. Usually the inlet opening 13 is arranged above the machine 10 and the delivery aperture 12 is frontal. Inside the machine 10, between the aforesaid inlet openings 13 and the delivery openings 12, is envisaged a reception and ingredients to be processed vessel 14.

The delivery opening 12 is connected to the vessel 14 by means of a delivery channel 15 for the processed products.

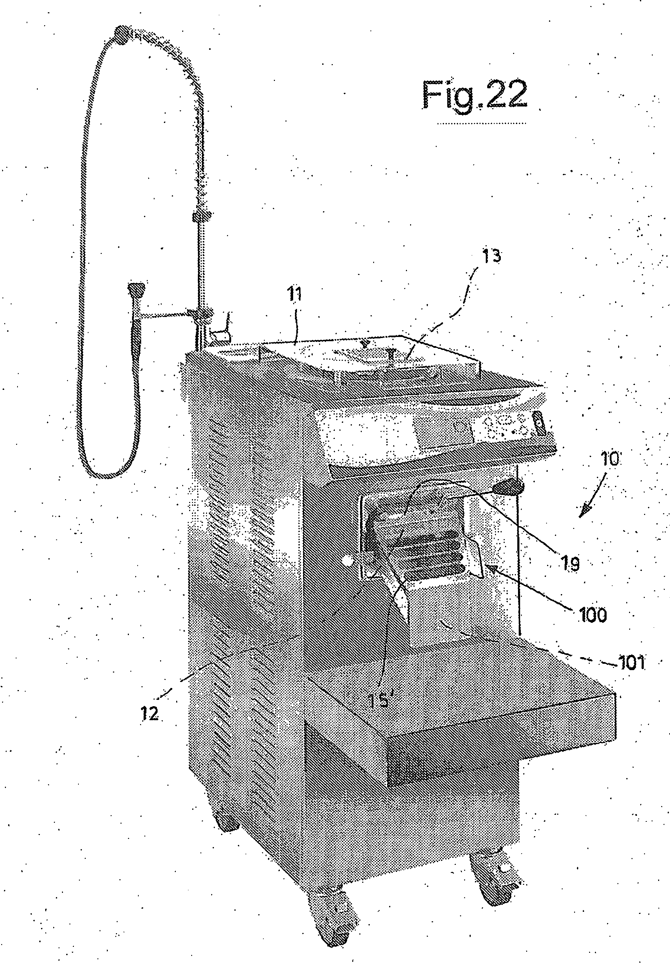

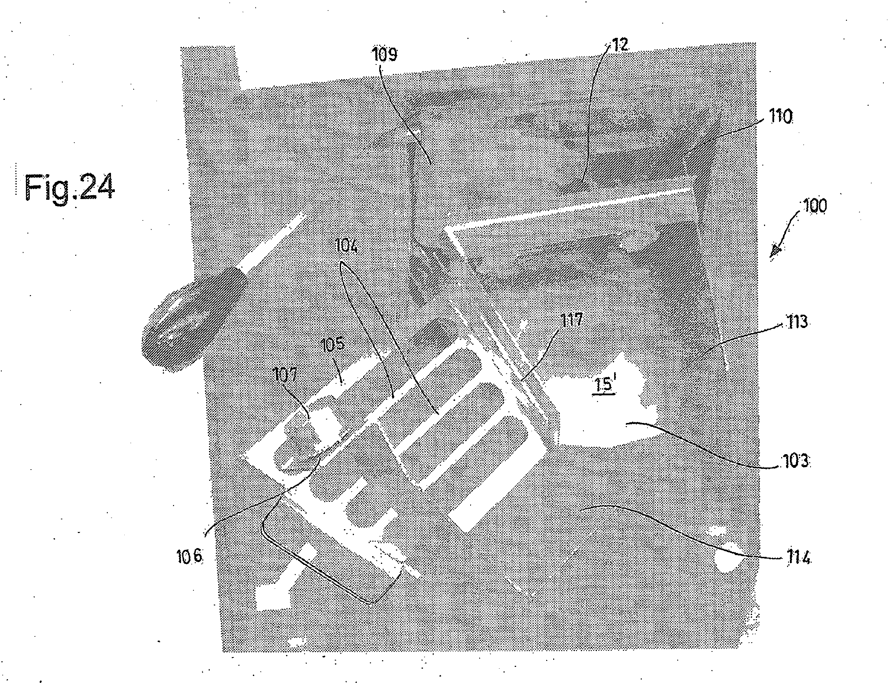

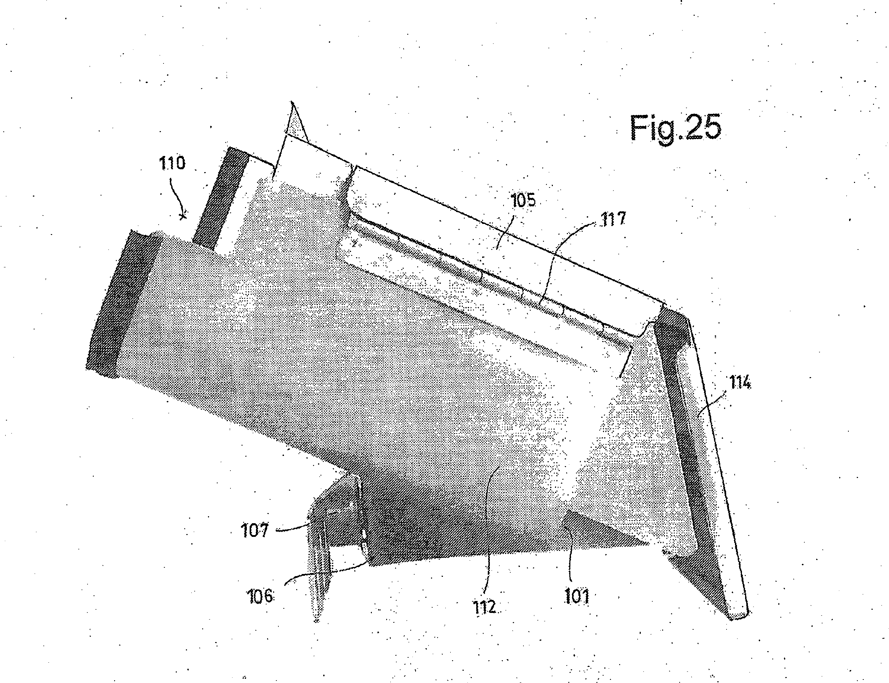

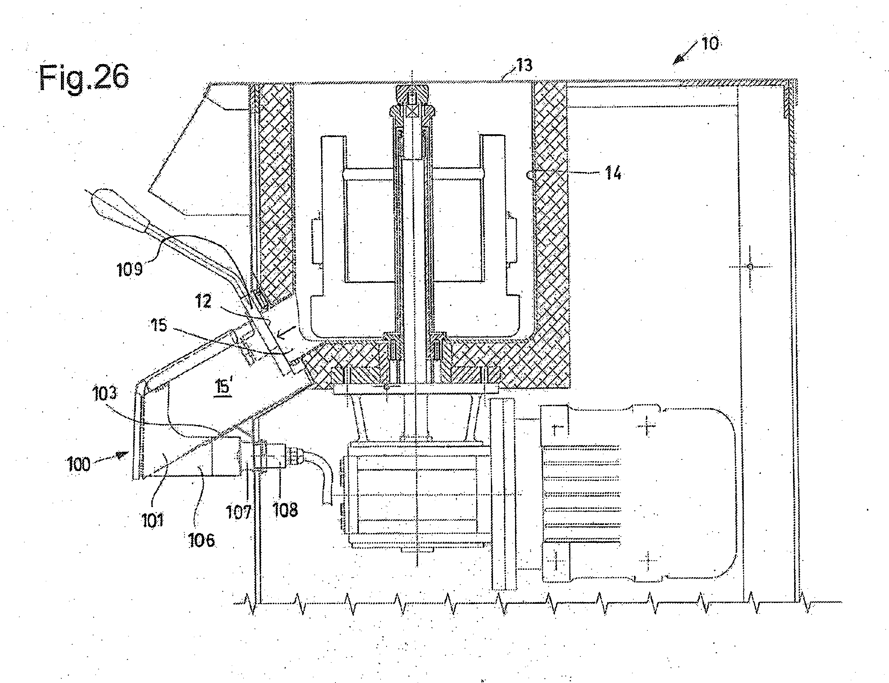

Circuits of heating and cooling acting along the lateral sides of the vessel and stirring means acting within the vessel 14, complete the machine. The machine 10 also comprises a device for protection of the outlet with reference to Figures 22-28, intended as a delivery opening 12, consisting of a hollow structure 100, of the box-like type, which extends outwardly from the machine 10 from the delivery opening 12.

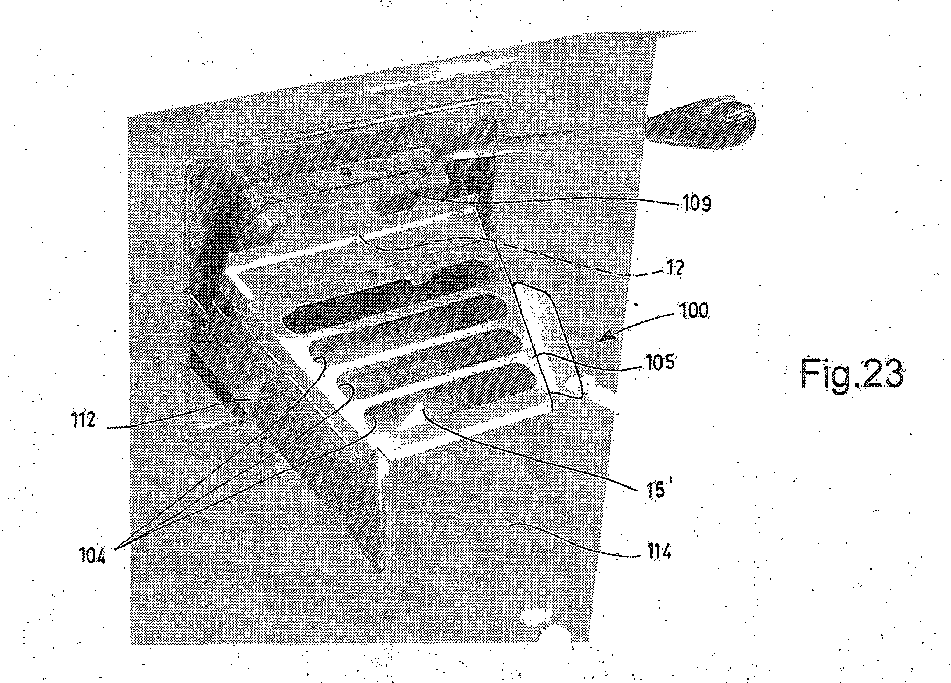

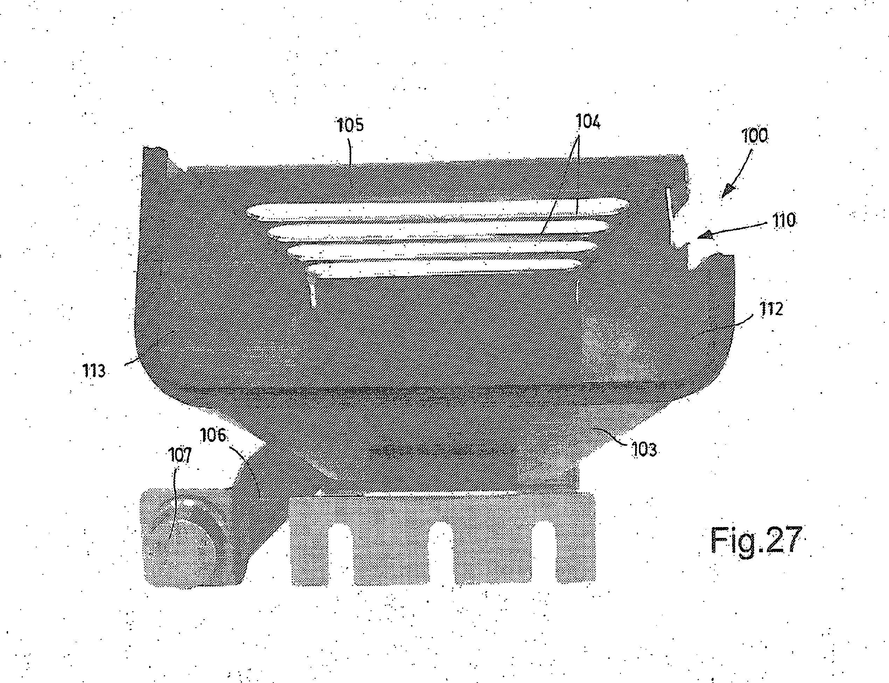

As shown in the attached figures 23-28, this hollow structure 100 of protection of the outlet is configured so as to provide an extension 15' for the discharge channel 15 from the delivery opening 12 up to a discharge outlet 101 of the products, formed in the hollow structure 100 of protection of the outlet at an opposite position with respect to the delivery opening 12. Figure 27 shows schematically how channel 15' is made within the hollow structure 100 of protection of the outlet.

In this way, the hollow structure 100 of protection of the outlet prevents the insertion of fingers/hands of the user in the discharge channel 15, by moving away the discharge outlet 101 from the rotating parts located upstream of the delivery opening 12. Therefore, having safeguarded and increased safety by using the hollow structure 100 of protection of the outlet, it is possible to remove the grids, at present usually located at the delivery opening 12, thus allowing the free outflow of the treated food substances.

This free outflow allows advantageously, and not at the expense of safety as far as described previously, to deliver even solid foods in pieces or foamy substances whipped without the problems that currently affect the known machines described in the introductory part of the present application.

According to the embodiment shown in Figures 22-28, the hollow structure 100 of protection of the outlet is shaped like a truncated pyramid where the larger base is open and associated to the delivery opening 12. However, other geometries of the hollow structure 100 are also possible for the protection of the outlet, for example of the conical, funnel, or parallelepiped type. According to the example shown in Figures 22-28, the hollow structure 100 of protection of the outlet comprises a sliding surface 103, preferably inclined, having a first end at the delivery opening 12 and a second end associated to the discharge outlet 101. Preferably, the sliding surface 103 has, at least at the second end, a guide, and concentration V-section for food substances in the phase of being delivered.

As can be seen, the discharge outlet 101 is made by providing an extension of the sliding surface 103 lower with respect to the remaining lateral 112, 113 and upper 105 surfaces.

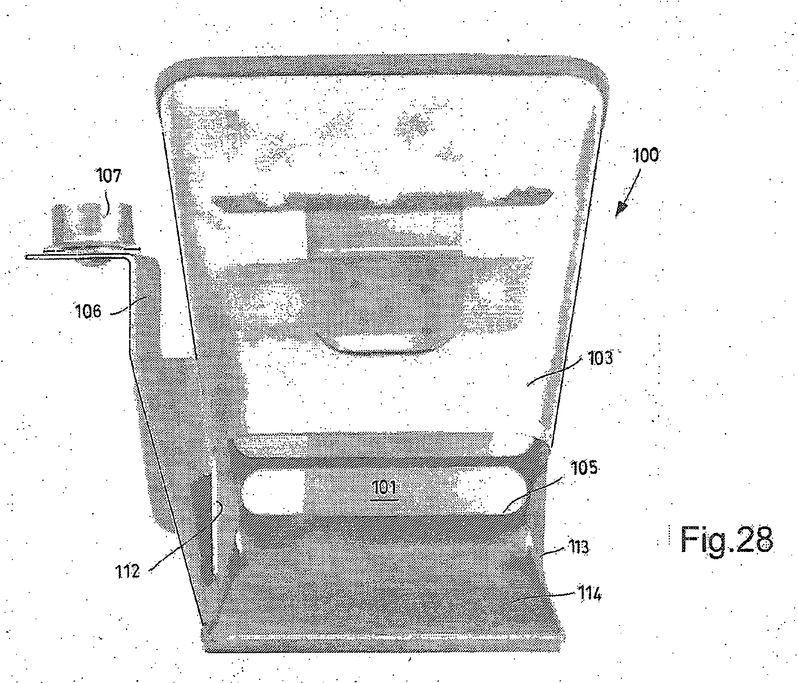

In Figure 28 is visible how the lower extension of the sliding surface 103 with respect to the remaining lateral 112, 113, and upper 105 surfaces, carries out the discharge outlet 101.

The hollow structure 100 of protection of the outlet completes the front surface 114 facing the delivery opening 12 and formed integrally with the upper surface 105 from which hangs downwards, by delimiting frontally the discharge outlet 101.

Preferably, the hollow structure 100 of the outlet protection comprises the splits 104 on the upper viewing surface 105 of the food substances in the delivery phase.

In addition, at least one surface, preferably the upper 105, is constrained in a movable manner with respect to the rest of the hollow structure 100 of protection of the outlet to detect a first closed position, wherein the channel 15' is not accessible, and a second open position wherein the same channel 15' is accessible.

In the shown example, this coupling is made by means of a hinge 117 located between the upper surface 105 and a lateral surface 112.

The movable surface 105 comprises a rear and a lateral extension 106 provided with releasable locking means for the movable surface 105 in the closed position. These means can be a magnetic coupling 107 provided with a sensor 108 connected to a machine 10 control unit.

In this way, is prevented, for safety reasons, the operation of the rotating parts of the machine 10 with the open movable surface 105, and the accessible channel 15'.

To facilitate cleaning, the hollow structure 100 is associated to the delivery opening 12 in a removable manner.

Finally, the machine 10, envisages a bayonet 109 which can be activated in rotation to release the delivery opening 12 between the channel 15 and the extension 15' thereof.

In this case, the hollow structure 100 of protection of the outlet can comprise at the bayonet 109, when in the open position, a manoeuvre split 110 for the bayonet thereof.

Understanding the advantage of having a delivery unit 100 is quite easy.

The machine 10 comprises a hollow structure 100 of protection of the outlet, which, starting from the delivery opening 12 extends outwardly of the machine 10, and is configured for creating an extension 15' for the discharge channel 15.

This extension 15' connects the delivery opening 12 to a discharge outlet 101, formed in the hollow structure 100 of protection of the outlet in a position opposite to the delivery opening 12 thereof.

In this way, safety is further increased, by increasing the distance between the discharge outlet 101 and the rotating members located inside the machine upstream of the delivery opening 12.

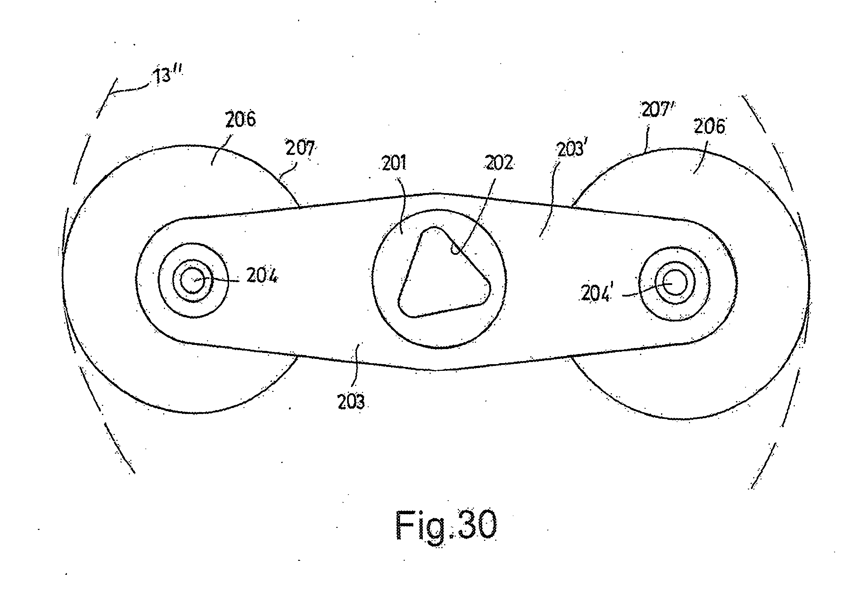

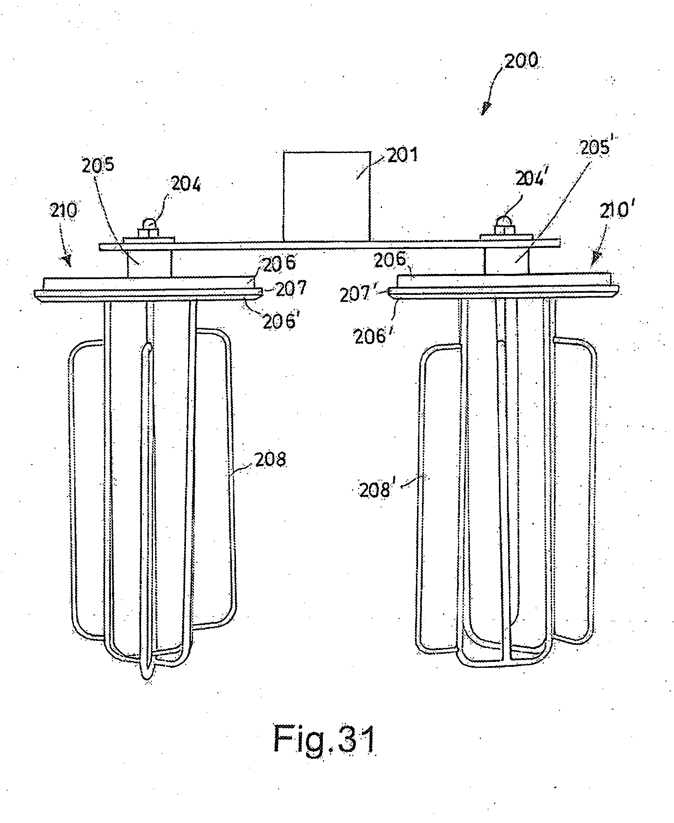

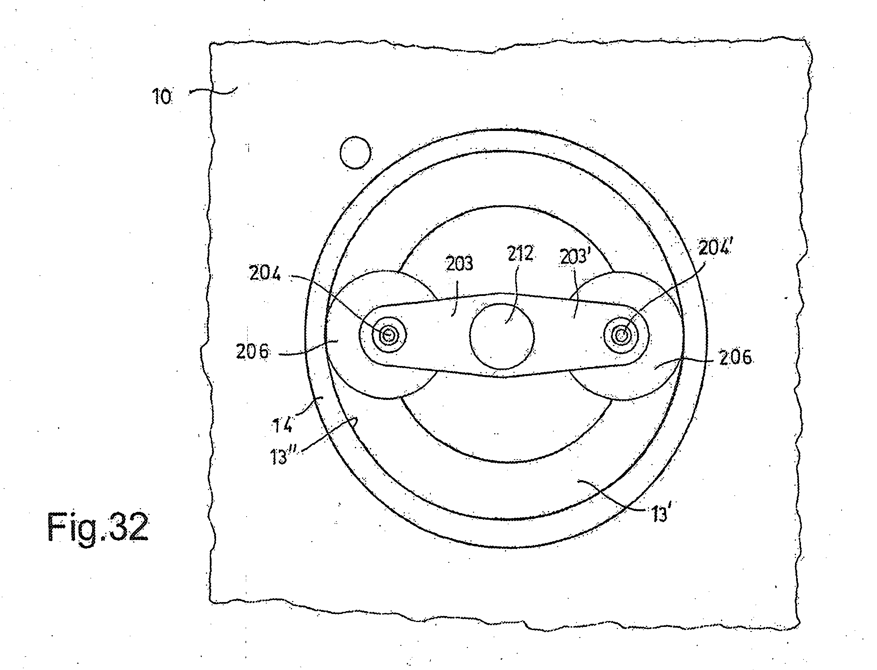

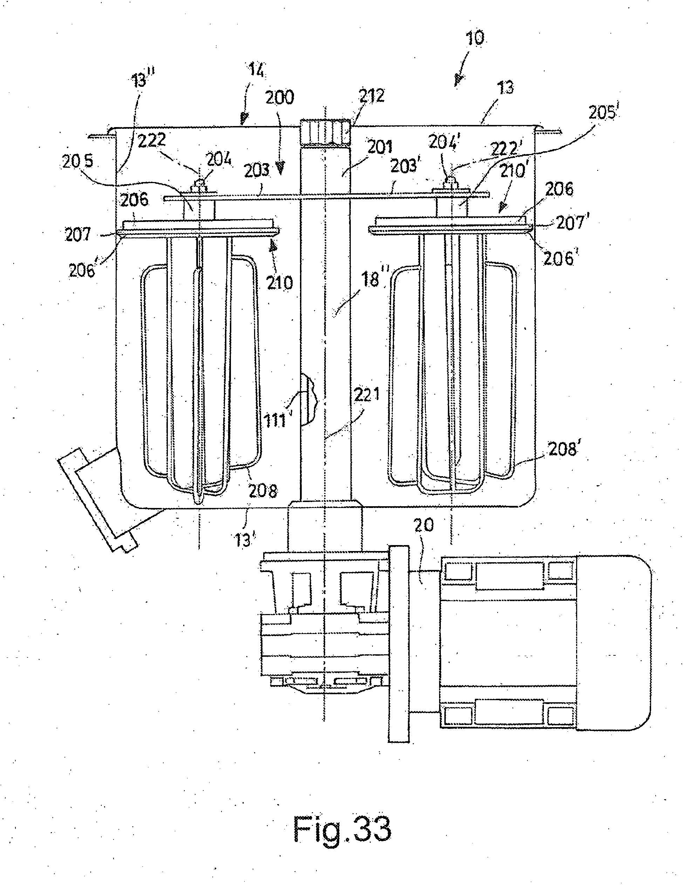

Once avoided the accidental insertion of fingers of a user inside the delivery opening 12, it was advantageously possible to remove the grid from the opening thereof 12, allowing the free outflow of the treated food substances, even if the latter are also foods in solid pieces or foamed whipped substances. With reference to Figures 29-33, with 200 is shown an embodiment of a removable component for professional multipurpose machines 10 suitable for whipping cream, meringues, sponge cakes, macaroons and other similar substances.

This kitchen machine 10 is of the type comprising a cylindrical vessel 14 of reception and processing of cream, meringues, sponge cakes, macaroons, and other food substances to be whipped.

This vessel is equipped with an upper inlet opening 13, a bottom 13' and a cylindrical lateral side 13''.

The machine also comprises a vertical sleeve 18'' fixed with the vessel bottom 13' and a driving shaft 111', inside the sleeve 18'', said driving shaft 111' with axis 221 centred in said bottom 13' that extends from the vessel 13' towards the inlet opening 13 and which is placed selectively in rotation about its axis 221 by a motor drive 20.

A whipping group 200 is also envisaged for food substances to be whipped, which is constraining to the said driving shaft 111' at the upper inlet opening 13 of the vessel 14 and which extends as a cantilever towards the bottom 13' thereof.

This whipping group 200 comprises a central portion 201 of integral constraint with the drag shaft 111' and at least two lateral extensions 203, 203' which extend radially from the drag shaft 111' towards the cylindrical lateral side of the vessel 13''.

Each one of these lateral extensions 203, 203' supports a whipping element 208, 208' directed towards the bottom wall of the vessel, which is free to rotate about its vertical axis thereof 222, 222'.

Of course, with the term whipping group is intended both the actual whipping elements and other equivalent elements such as for example anchor elements for the processing of bread or other food products.

In fact, the device can be used not only for whipping but also to mix or shake pasty substances.

Among the whipping elements 208, 208' and the lateral extensions 203, 203' are envisaged disc elements 210, 210' integral with the whopping elements 208, 208' in contact with the cylindrical lateral side of the vessel 14 by means of gaskets 207, 207' placed on the disc elements 210, 210'.

In this way, advantageously and in an innovative way with respect to the prior art; the discs 210, 210' acting in contact with the lateral sides of the vessel 13'', by means of gaskets 207, 207', spontaneously impart rotation to the whipping elements 208, 208' about the respective axes 222, 222' when the whipping group 200 is dragged in rotation by the driving shaft 111'.

Preferably, the whipping group 200 is constrained in a releasable manner to the drag shaft 111' by means of a closed element 212 which acts on a portion of the drag shaft 111' that protrudes from a passage hole 202 formed in the central portion 201.

Preferably, furthermore the whipping group is connected in a freely rotating manner to the lateral extensions 203, 203' by means of sleeve elements 205, 205' fixed by means of screws 204, 204' and the disc elements 210, 210' comprise an upper and lower portion 206, 206' of containment of a gasket 207, 207' in contact with the cylindrical lateral side 13'' of the vessel 14.

In a nutshell, the machine achieves a plurality of advantageous effects. The multipurpose professional kitchen machine consists in a different solution and alternative with respect to known machines wherein, in particular, the user can continuously monitor the products being processed, both in heating and in cooling, and take action by adding further ingredients during processing.

The improved kitchen and laboratory machine for processing of food substances offers an alternative solution to those existing currently, by allowing also the delivery of food products in solid pieces, or fluid whipped substances, without compromising the quality and without exposing the user to the risk of accidentally coming into contact with the rotating members, located upstream of the discharge outlet.

In addition, the removable component for selective professional machines suitable for whipping cream, meringues, sponge cakes, macaroons and other similar kitchen substances consists in a different solution and alternative with respect to the known machines wherein the relative motion of rotation about the axis of the whipping elements is spontaneously generated during use without requiring any mechanical transmission.

The multipurpose professional kitchen machine of the present invention as defined in the claims is susceptible to several modifications and variations. In practice, the materials used, as well as their dimensions, may be of any type according to technical requirements.

## Claims

1. A multipurpose professional kitchen machine (10), in particular for gastronomy/catering processes, but also for confectionary, ice-cream and chocolate making processes, comprising an upper inlet opening (13) for the ingredients to be processed and for the extraction of processed packaged or solid products, at least one removable lid (11, 11') for the closure of said one upper inlet opening (13) for the ingredients, and a front opening for the delivery (12) of the processed ingredients, if of the creamy type, underneath said inlet opening (13), being envisaged a single vertical vessel (14) for receiving and processing in heating and cooling of said ingredients, said front delivery opening (12) being directly connected to the bottom of said vessel (14) by means of an inclined delivery channel (15) for the processed products, if of the creamy type, wherein it envisages two independent circuits, one for heating and one for cooling associated to said vessel. (14), **characterised in that** said cooling circuit comprises cooling channels (17') for the passage of a refrigerant gas arranged only at the sides of the vessel (14), said heating circuit comprises heating channels (17) for the passage of a heat conductor liquid arranged both at said bottom and at said sides of said vessel (14), said circulation of the refrigerant gas is selectively achievable both in a continuous manner and in an intermittent manner.

2. A machine according to claim 1, **characterised in that** a receiving device (16) for a vertical drag sleeve (18) for components, that extends from said bottom up to said inlet opening (13) is envisaged in the centre portion of said bottom, said sleeve (18) being provided with means (19) for male-female coupling with said processing components at the base thereof, said processing components being in turn equipped with male-female coupling means with other processing components, there being provided a motor drive (20) positioned underneath said vessel for controlling in rotation said sleeve (18) or other components that can be mounted in an independent manner with respect to said sleeve (18) in both rotation directions of, said rotation being variable/programmable and instantaneously modifiable.

3. A machine according to any one of the preceding claims, **characterised in that** it comprises a hollow structure (100) for protection of the discharge, which, starting from said delivery opening (12) extends outwardly of said machine (10), said hollow structure (100) for protection of the discharge being configured to provide an extension (15') of said delivery channel (15) from said delivery opening (12) to a discharge outlet (101) formed in said hollow structure (100) for protection of the outlet in a position opposite to said delivery opening (12).

4. A machine according to claim 3, **characterised in that** said extension (15') has the same inclination as said delivery channel (15).

5. A machine (10) according to claim 3 or 4, **characterised in that** said hollow structure (100) is shaped like a truncated pyramid where the larger base is open and associated to said delivery opening (12).

6. A machine (10) according to claim 5, **characterised in that** said hollow structure (100) comprises a sliding surface (103) having a first end at said delivery opening (12) and a second end associated to said discharge outlet (101), said sliding surface (103) having, at least at said second end, a V-section for the concentration of said food substances in the delivery phase.

7. A machine (10) according to any one of the preceding claims 3 to 6, **characterised in that** said hollow structure (100) comprises upper splits (104) for viewing said food substances in the delivery phase.

8. A machine (10) according to any one of the preceding claims, **characterised in that** said hollow structure (100) comprises at least one surface (105) constrained in a movable manner with respect to the rest of said hollow structure (100) between a first closed position, wherein said extension (15') is not accessible, and a second open position, wherein said extension (15') is accessible, said movable surface (105) comprising a lateral extension (106) equipped with releasable locking means of said movable surface (105) in said closed position, being provided automatic locking means for the rotating member active in the open position of the mobile surface (105) being envisaged.

9. A machine (10) according to any one of the preceding claims 3 to 8, **characterised in that** a bayonet (109), which can be activated in rotation to release said delivery opening (12) is envisaged between said channel (15) and said extension (15'), and said hollow structure (100) comprising at said bayonet (109), when in the open position, a manoeuvring split (110) for said bayonet.

## Patentansprüche

1. Gewerbliche Mehrzweck-Küchenmaschine (10), insbesondere für Gastronomie-/Catering-Prozesse, aber auch für Prozesse zur Herstellung von Konditorwaren, Speiseeis und Schokolade, die eine obere Einlassöffnung (13) für die zu verarbeitenden Zutaten und zum Herausnehmen von verarbeiteten verpackten oder festen Produkten, mindestens einen abnehmbaren Deckel (11, 11') zum Verschließen der einen oberen Einlassöffnung (13) für die Zutaten und eine vorderseitige Öffnung zum Ausgeben (12) der verarbeiteten Zutaten, falls vom cremigen Typ, unterhalb der Einlassöffnung (13) umfasst, wobei ein einzelnes senkrechtes Gefäß (14) zum Aufnehmen und Verarbeiten mit Heizen und Kühlen dieser Zutaten vorgesehen ist, wobei die vordere Ausgabeöffnung (12) mittels eines geneigten Ausgabekanals (15) für die verarbeiteten Produkte, falls vom cremigen Typ, direkt mit dem Boden dieses Gefäßes (14) verbunden ist, wobei sie zwei unabhängige Kreisläufe, einen zum Heizen und einen zum Kühlen, vorsieht, die mit dem Gefäß (14) verbunden sind, **dadurch gekennzeichnet, dass** der Kühlkreislauf Kühlkanäle (17') für den Durchfluss eines Kühlmittelgases umfasst, die nur auf den Seiten des Gefäßes (14) angeordnet sind, dass der Heizkreislauf Heizkanäle (17) für den Durchfluss einer Wärmeleitflüssigkeit umfasst, die sowohl am Boden als auch auf den Seiten des Gefäßes (14) angeordnet sind, und dass der Umlauf des Kühlmittelgases selektiv sowohl kontinuierlich als auch intermittierend bewerkstelligt werden kann.

2. Maschine nach Anspruch 1, **dadurch gekennzeichnet, dass** eine Aufnahmevorrichtung (16) für eine senkrechte Schlepphülse (18) für Komponenten, die sich vom Boden bis zur Einlassöffnung (13) erstreckt, im mittleren Abschnitt des Bodens vorgesehen ist, wobei diese Hülse (18) mit Mitteln (19) für eine Steckverbindung mit den Verarbeitungskomponenten an ihrer Basis vorgesehen ist, wobei die Verarbeitungskomponenten ihrerseits mit Steckverbindungsmitteln für andere Verarbeitungskomponenten ausgestattet sind, wobei ein unter dem Gefäß angeordneter Motorantrieb (20) zum Steuern in Drehung der Hülse (18) oder anderer Komponenten, die unabhängig von der Hülse (18) montiert werden können, in beiden Drehrichtungen dieser Drehung, die variabel/programmierbar und unverzüglich änderbar ist, vorgesehen ist.

3. Maschine nach einem der vorhergehenden Ansprüche, **dadurch gekennzeichnet, dass** sie eine hohle Konstruktion (100) zum Schutz des Ausflusses umfasst, die sich, ausgehend von der Ausgabeöffnung (12), nach außerhalb der Maschine (10) erstreckt, wobei diese hohle Konstruktion (100) zum Schutz des Ausflusses gestaltet ist, um eine Verlängerung (15') des Ausgabekanals (15) von der Ausgabeöffnung (12) zu einem Ausflussauslass (101), der in der hohlen Konstruktion (100) ausgebildet ist, zum Schutz des Auslasses in einer der Ausgabeöffnung (12) entgegengesetzten Stellung bereitzustellen.

4. Maschine nach Anspruch 3, **dadurch gekennzeichnet, dass** die Verlängerung (15') die gleiche Neigung wie der Ausgabekanal (15) hat.

5. Maschine (10) nach Anspruch 3 oder 4, **dadurch gekennzeichnet, dass** die hohle Konstruktion (100) wie ein Pyramidenstumpf geformt ist, wobei die größere Grundfläche offen und mit der Ausgabeöffnung (12) verbunden ist.

6. Maschine (10) nach Anspruch 5, **dadurch gekennzeichnet, dass** die hohle Konstruktion (100) eine Gleitfläche (103) mit einem ersten Ende an der Ausgabeöffnung (12) und einem mit dem Ausflussauslass (101) verbundenen zweiten Ende umfasst, wobei diese Gleitfläche (103) zumindest an dem zweiten Ende einen V-Querschnitt zum Ansammeln der Nahrungsmittelsubstanzen in der Ausgabephase aufweist.

7. Maschine (10) nach einem der vorhergehenden Ansprüche von 3 bis 6, **dadurch gekennzeichnet, dass** die hohle Konstruktion (100) obere Schlitze (104) zum Sehen der Nahrungsmittelsubstanzen in der Ausgabephase umfasst.

8. Maschine (10) nach einem der vorhergehenden Ansprüche, **dadurch gekennzeichnet, dass** die hohle Konstruktion (100) mindestens eine Fläche (105) umfasst, die gegenüber der übrigen hohlen Konstruktion (100) zwischen einer ersten geschlossenen Stellung, in der die Verlängerung (15') nicht zugänglich ist, und einer zweiten geöffneten Stellung, in der die Verlängerung (15') zugänglich ist, beweglich befestigt ist, wobei diese bewegliche Fläche (105) einen seitlichen Fortsatz (106) umfasst, der mit lösbaren Mitteln zum Arretieren der beweglichen Fläche (105) in der geschlossenen Stellung versehen ist, wobei automatische Arretierungsmittel für das in der geöffneten Stellung der beweglichen Fläche (105) aktive Drehelement vorgesehen sind.

9. Maschine (10) nach einem der vorhergehenden Ansprüche von 3 bis 8, **dadurch gekennzeichnet, dass** ein Bajonett (109), das in Drehung versetzt werden kann, um die Ausgabeöffnung (12) freizugeben, zwischen dem Kanal (15) und der Verlängerung (15') vorgesehen ist, und die hohle Konstruktion (100) an diesem Bajonett (109), wenn in der geöffneten Stellung, einen Betätigungsschlitz (110) für dieses Bajonett umfasst.

## Revendications

1. Appareil de cuisine professionnel multifonction (10), en particulier pour des processus de gastronomie/restauration, mais également pour la confiserie, des processus de production de glace et de chocolat, comprenant une ouverture d'entrée supérieure (13) pour les ingrédients à traiter et pour l'extraction de produits solides ou conditionnés traités, au moins un couvercle amovible (11, 11') pour la fermeture de ladite ouverture d'entrée supérieure (13) pour les ingrédients, et une ouverture frontale pour la distribution (12) des ingrédients traités, si du type crémeux, au-dessous de ladite ouverture d'entrée (13), étant envisagé un récipient vertical unique (14) pour la réception et le traitement par chauffage et refroidissement desdits ingrédients, ladite ouverture de distribution frontale (12) étant directement connectée au fond dudit récipient (14) au moyen d'un canal de distribution incliné (15) pour les produits traités, si du type crémeux, dans lequel il prévoit deux circuits indépendants, un pour le chauffage et un pour le refroidissement, associés audit récipient (14), **caractérisé en ce que** ledit circuit de refroidissement comprend des canaux de refroidissement (17') pour le passage d'un gaz réfrigérant agencés seulement au niveau des côtés du récipient (14), ledit circuit de chauffage comprend des canaux de chauffage (17) pour le passage d'un liquide conducteur de chaleur agencés à la fois au niveau dudit fond et au niveau desdits côtés dudit récipient (14), ladite circulation de gaz réfrigérant peut être obtenue sélectivement à la fois d'une manière continue et d'une manière intermittente.

2. Appareil selon la revendication 1, **caractérisé en ce qu'**un dispositif de réception (16) pour un manchon de tirage vertical (18) pour des composants, qui s'étend à partir dudit fond jusqu'à ladite ouverture d'entrée (13) est prévu dans la portion centrale dudit fond, ledit manchon (18) étant doté de moyens (19) pour un accouplement mâle-femelle avec lesdits composants de traitement à la base de ceux-ci, lesdits composants de traitement étant équipés à leur tour de moyens d'accouplement mâle-femelle avec d'autres composants de traitement, un entraînement moteur (20) étant prévu, positionné au-dessous dudit récipient pour commander en rotation ledit manchon (18) ou d'autres composants qui peuvent être montés d'une manière indépendante par rapport audit manchon (18) dans les deux directions de rotation, ladite rotation étant variable/programmable et modifiable de manière instantanée.

3. Appareil selon l'une quelconque des revendications précédentes, **caractérisé en ce qu'**il comprend une structure creuse (100) pour la protection de la décharge, qui, à partir de ladite ouverture de distribution (12), s'étend vers l'extérieur dudit appareil (10), ladite structure creuse (100) pour la protection de la décharge étant configurée pour fournir une extension (15') dudit canal de distribution (15) de ladite ouverture de distribution (12) à une sortie de décharge (101) formée dans ladite structure creuse (100) pour la protection de la sortie dans une position opposée à ladite ouverture de distribution (12).

4. Appareil selon la revendication 3, **caractérisé en ce que** ladite extension (15') a la même inclinaison que ledit canal de distribution (15).

5. Appareil (10) selon la revendication 3 ou 4, **caractérisé en ce que** ladite structure creuse (100) est sous la forme d'une pyramide tronquée où la base plus grande est ouverte et associée à ladite ouverture de distribution (12).

6. Appareil (10) selon la revendication 5, **caractérisé en ce que** ladite structure creuse (100) comprend une surface de glissement (103) ayant une première extrémité au niveau de ladite ouverture de distribution (12) et une deuxième extrémité associée à ladite sortie de décharge (101), ladite surface de glissement (103) ayant, au moins au niveau de ladite deuxième extrémité, une section en V pour la concentration desdites substances alimentaires dans la phase de distribution.

7. Appareil (10) selon l'une quelconque des revendications précédentes 3 à 6, **caractérisé en ce que** ladite structure creuse (100) comprend des fentes supérieures (104) pour observer lesdites substances alimentaires dans la phase de distribution.

8. Appareil (10) selon l'une quelconque des revendications précédentes, **caractérisé en ce que** ladite structure creuse (100) comprend au moins une surface (105) fixée de manière mobile par rapport au reste de ladite structure creuse (100) entre une première position fermée, dans laquelle ladite extension (15') n'est pas accessible, et une deuxième position ouverte, dans laquelle ladite extension (15') est accessible, ladite surface mobile (105) comprenant une extension latérale (106) équipée de moyens de verrouillage libérables de ladite surface mobile (105) dans ladite position fermée, des moyens de verrouillage automatique pour l'élément rotatif, actifs dans la position ouverte de ladite surface mobile (105), étant prévus.

9. Appareil (10) selon l'une quelconque des revendications précédentes 3 à 8, **caractérisé en ce qu'**une baïonnette (109), qui peut être activée en rotation pour libérer ladite ouverture de distribution (12) est prévue entre ledit canal (15) et ladite extension (15'), et ladite structure creuse (100) comprenant au niveau de ladite baïonnette (109), quand elle est dans la position ouverte, une fente de manoeuvre (110) pour ladite baïonnette.
